# EUROPEAN PATENT APPLICATION

(11) **EP 3 226 528 A1**
(43) Date of publication of application: **04.10.2017**
(21) Application number: 16163224.5
(22) Date of filing: 31.03.2016
(51) Int. Cl.: H04M 15/00, H04M 3/00, H04W 24/08, H04M 3/42

(54) **METHOD AND SYSTEM FOR DETECTION OF INTERCONNECT BYPASS USING TEST CALLS TO REAL SUBSCRIBERS**

(71) Applicant: Sigos NV, 9050 Gent-Ledeberg (BE)
(72) Inventor: Van Der Meeren, Guy, 9052 Gent (BE); Verlinde, Dirk, 8200 Sint-Andries (BE); Mirzabayov, Nijat, 9000 Gent (BE)
(74) Representative: Plas, Axel Ivo Michel

(57) **Abstract**

A method for detection of a bypass (134; 734) of an interconnect (133; 733) to a telecommunication network (130; 730), comprises:
- generating a test call (263; 367; 467; 567; 663) to or through a real subscriber number of a real subscriber (131; 231; 331; 431; 531; 631; 731) active in the telecommunication network;
- obtaining call data (154, 153; 265; 372; 472; 572; 665; 753) from the operator of the real subscriber (131; 231; 331; 431; 531; 631; 731) and/or from a test probe (132; 232; 332; 432; 532; 632; 732) whereto the real subscriber number of the real subscriber (131; 231; 331; 431; 531; 631; 731) is temporarily forwarded during a time interval wherein the test call (263; 367; 467; 567; 663) is made;
- extracting a received calling line identifier for the test call (263; 367; 467; 567; 663) from the call data (154, 153; 265; 372; 472; 572; 665; 753); and
- detecting presence of a bypass (134; 734) by analysis of the received calling line identifier.

## Description

### Field of the Invention

The present invention generally relates to detecting the presence of an interconnect bypass in communication networks, in particular in wireless telecommunication networks such as for example Global System for Mobile communications (GSM) networks, Universal Mobile Telecommunications System (UMTS) networks, or similar wireless telecommunication networks, but also in wired telecommunication networks or Voice over Internet Protocol (VoIP) networks. Such an interconnect bypass is also called a Subscriber Identity Module box (SIMbox), an interconnect gateway or GSM gateway, or a leaky Private Branch exchange (leaky PBX).

The present invention in particular concerns improved detection of interconnect bypass in a controlled environment using test calls, i.e. calls made on purpose from a certain origin at a certain time with the aim to detect fraud.

### Background of the Invention

When a telecommunication network operator provides access from his network to a network of another telecommunication network operator and vice versa, both operators, by means of agreement or sometimes subject to regulatory requirements, set up a suitable interconnection facility which is subjected to extensive testing in order to assess the technical reliability and the quality of service of the interconnection facility such that agreed upon or regulatory standards are met. In addition to the technical arrangements there are in many cases also interconnection charges that the telecommunication network operator receiving a call charges for the calls passing through the interconnection facility. When a calling party calls from another telecommunication network to the network of the telecommunication network operator of the receiving party, for example because the calling party is a client of a network operator different from the receiving network operator or because the calling party is travelling abroad and is making use of the network of a partnering network operator that provides roaming services to its own network operator, this call has to pass through the interconnection facility.

An interconnect bypass attempts to bypass the interconnection facilities of the network operator thereby avoiding at least part of the interconnection charges. These attempts are made by bypass operators that reroute a part of the traffic of calling parties within the network of another operator to the network of the receiving operator without going through the interconnection facility. Generally these bypass operators make use of end user facilities from the receiving operator, i.e. subscriptions represented by Subscriber Identity Module (SIM) cards, that are exploited to inject off-net calls as on-net calls in the receiving operator's network. In other cases, end user facilities of another operator, different from the receiving operator, may be used, e.g. in case such calls cost less than the normally applicable interconnection charges.

Interconnect bypass leads to a direct loss of revenue for the receiving network operator. In addition, interconnect bypass leads to technical problems. Indeed, the bypass operator uses end user facilities to provide a network interconnection. The use of these end user facilities involves the setup of a new call and the creation of an additional interface. As a consequence, there is a serious risk for quality problems such as degraded quality of audio or data transmissions, interruptions during the call, prolonged waiting time during the call initiation, unacceptable delays in the audio or data transmissions, etc. Furthermore, because a bypass operator reroutes an off-net call by setting up a new on-net call making use of end user facilities in the receiving operator's network, the Calling Line Identification (CLI) of the calling party in the off-net call will be replaced with the CLI of the misused end user facility in the signalling of the new on-net call. This leads to inconveniences for the receiving party which receives an erroneous CLI as a result of which services like caller recognition fail, and can also have more serious consequences for safety when for instance a call is made to emergency services, police services or other services that may use the CLI for identity or location tracking purposes. Furthermore, interconnect bypass also creates serious technical difficulties for automated telephone switchboards that operate on the basis of the CLI of the incoming call.

Consequently, there is a demand from network operators for adequate systems or solutions to identify end user facilities like SIM cards that are used by bypass operators in order to enable the operator to promptly stop the use of such end user facilities.

A first type of solutions to detect the presence of an interconnect bypass is implemented in a so called Fraud Management System (FMS). An FMS collects and analyzes the Call Detail Records (CDRs) received from a network operator and/or call signalling in order to detect subscriptions with suspicious behaviour that is typical for an interconnect bypass. Suspicious behaviour, i.e. call characteristics that may indicate interconnect bypass activity like for instance the absence of incoming calls, an abnormally high rate of outgoing phone calls, absence of messaging like ingoing/outgoing SMS messages, a high call diversity, i.e. a high ratio between the number of different destinations called versus the total number of destinations called, e.g. higher than 80 %, etc., is reported by the FMS to enable the operator to deactivate one or more subscriptions that are suspected of being used by a bypass operator. Such an FMS is for instance described in United States Patent Application US 2009/0069047 entitled "Methods, Systems, and Computer Program Products for Detecting Wireless Bypass in a Communications Network".

FMS requires a high number of events in order to obtain statistically relevant measures as a consequence of which its bypass detection latency is rather high.

Also United States Patent Application US 2006/0045248 entitled "Method of Telecommunications Call Record Correlation Providing a Basis for Quantitative Analysis of Telecommunications Call Traffic Routing" describes a system that relies on CDRs of real subscriber calls, i.e. real calls from a real subscriber to a real subscriber the origin, route and timing of which cannot be controlled. The system of US 2006/0045248 correlates the CDRs of random calls in order to identify matching CDRs, i.e. tuples of corresponding originating and terminating CDRs. See paragraphs [0101]-[0111] of US 2006/0045248. Thereafter, as described in paragraph [0112], the system compares the calling line identifiers (CLIs) in the matching CDRs in order to detect interconnect bypass.

The technique known from US 2006/0045248 is limited because its starting point is a random set of real subscriber calls, the origin, route and timing of which cannot be controlled. If the set does not contain calls from Turkmenistan, it will be impossible to detect an interconnect bypass on routes from Turkmenistan. It might even be impossible to know the true origin of a call in the system known from US 2006/0045248.

A second type of solutions to detect the presence of an interconnect bypass relies on Test Call Generation or TCG. A test call platform comprises probes or robots in communications networks of plural operators, schedules and executes test calls between these probes, and analyzes the received CLI in the tests calls in order to detect bypass operations. TCG brings the advantage of a controlled environment: test calls are made from a certain origin at a certain time on purpose to detect bypass fraud preferably on suspicious routes. Such test call platform is for instance described in the European patent application EP 2671372 A1 entitled "A System for Detection of a Bypass of an Interconnect to a Telecommunication Network". In order to detect a bypass of an interconnect to a telecommunication network, such TCG platform schedules and executes a test call to the telecommunication network from outside the telecommunication network, more precisely to a receiver probe with a subscription for terminating the test call. The TCG system hence comprises a control system configured to initiate such test call from a certain origin, for instance a sender probe, to receive from the receiver probe call information comprising a received CLI of the test call, and to analyse the received CLI such that presence of the bypass can be detected. Such TCG system does not require an interface with the CDR database of an operator as it obtains the received CLI of the test call from the receiver probe.

One problem with these systems that make use of test calls is that they are exposed to the risk of counter-detection due to the specific behaviour of the calling pattern of the test calls, and the volume of test calls. To avoid connection costs, the test calls are normally not picked up. Typically, the test calls are also performed according to a fixed pattern of start time, ringing duration, etc., which may cause suspicion with a bypass operator. Another problem is that the subscriptions used to originate test calls and the subscriptions that terminate test calls may originate or terminate a large number of calls, such volume being also suspicious. This creates the risk that the bypass operators can detect and identify the subscriptions used for originating the test calls and/or the subscriptions used for receiving the test calls. The bypass operator can then subsequently blacklist these subscriptions in order to avoid bypass activity on test calls and as a consequence thereof avoid being detected. In order to be effective against such anti-detection measures taken by bypass operators, parts of the system for making test calls, such as for example the receiver probe or the means for originating test calls or the subscriptions or virtual numbers used to receive the test calls, could be reconfigured extensively, for example by providing them with new subscriptions for receiving or generating test calls. This however is a slow process, which casts money and may require physical intervention such as for example replacing a SIM card.

In order to mitigate the risk for counter-detection of test calls by bypass operators, European Patent Application EP 2 509 294 A1 entitled "A Telecommunication network bypass Detection System with Reduced Counter Detection Risk" describes a TCG platform wherein a large set of virtual numbers is used to terminate test calls at a single receiver probe. Different embodiments are described for constitution of the set of virtual numbers (mix of reused and unused numbers, non-consecutive numbers, numbers of multiple geographical zones or having different prefixes, etc.) and for the order wherein the virtual numbers or subsets of the virtual numbers (rotating, random rotating, etc.) can be used by the receiving probe.

The use of virtual numbers however is not free of problems. Due to internal fraud with the operator(s) of telecommunication network(s), e.g. a malicious employee who is knowledgeable on the list of virtual numbers and who is paid money by a bypass operator to disclose company confidential information, the list of virtual numbers may be disclosed to bypass operators which in this way have another possibility to blacklist the virtual numbers for bypass activity. An evident measure to complicate such internal fraud resides in regular replacement of the virtual numbers, e.g. monthly replacement of all virtual numbers by a new set of virtual numbers, but this requires discipline with the network operators that monthly have to allocate and configure for instance 500 numbers in case 5 test SIMs are each assigned 100 virtual numbers.

Another disadvantage of virtual numbers is that they will not appear on the white list of bypass operators who may focus bypass activity to only subscriber numbers on such white list generated and maintained by the bypass operator, e.g. a list of real subscribers that have a normal pattern of incoming international calls: for instance real subscriber numbers that regularly receive international traffic of varying duration, including sometimes calls of long duration, etc. Numbers used for test calls normally do not appear on such white list because numbers are selected that usually have not been used for some time, and only a minority of subscribers receive regular international calls such that when test numbers are selected randomly, only few of them will be on such white list. Bypass operators who concentrate their bypass activity on such white list consequently will not be detected when test calls are made to numbers used for test calls. Furthermore, it is difficult to make test numbers appear on such white list because bypass operators may look at a long history and it is expensive to establish a normal international traffic pattern.

It is worth noticing that a TCG platform further runs the risk that an inadvertent call made by a legitimate subscriber to one of the probes at a point in time whereon a test call is expected to arrive at this probe, i.e. a so called interfering call, will be considered to originate from an interconnect bypass as a result of which the legitimate subscription will be deactivated.

False positive bypass detections also occur in traditional FMS platforms since bypass operators implement anti-detection measures that artificially adapt their call behaviour to make it resemble normal subscribers behaviour.

International Patent Application WO 2012/003524 entitled "Advanced Predictive Intelligence for Terminating Bypass Detection and Prevention" describes a TCG system wherein test calls are made to real subscriber numbers, thus avoiding the use of numbers or virtual numbers that are temporarily exclusively allocated to a receiving test probe and that are vulnerable to detection by bypass operators. WO 2012/003524 foresees a so called PI Gateway that facilitates forwarding the test call destined to a real subscriber number to a local number controlled by the PI Gateway such that the received CLI can be analysed. Operation of the PI gateway is described from page 14, line 28 to page 17, line 4 in WO 2012/003524. The system known from WO 2012/003524 hence relies on a dedicated gateway, the PI gateway, where the signalling (e.g. SS7 signalling) is routed to such that the PI gateway can manage only the test call for forward to the local number whereas all other calls different from the test call are allowed to be terminated as usual at the real subscriber number.

The PI gateway from WO 2012/003524 is an additional piece of hardware that must be installed in the signalling path of the telecommunication network. Such PI gateway is complex to install and configure, and constitutes an additional point of failure in the operators network that must be trusted by the operator.

### Summary of the Invention

It is an objective of the present invention to disclose an improved method and system for detection of interconnect bypass using test calls wherein the drawbacks of existing solutions addressed above are resolved or mitigated. More particularly, it is an objective to disclose a TCG method and system with reduced risk for black- and/or white-listing by bypass operators but which does not require the installation and configuration of a gateway or alternate equipment in the signalling path of a telecommunication network. It is a further objective to increase the effectiveness of test call based bypass detection, i.e. to increase the detection rate of bypass activity, also in case the bypass activity is concentrated on a white list of numbers maintained by the bypass operator. It is a further objective to maintain a high detection rate over a longer period of weeks or even months without substantial manual interventions such as the regular replacement of large sets of virtual numbers used by test call receiving probes.

According to the present invention, the above mentioned objectives are realized by a method for detection of a bypass of an interconnect to a telecommunication network as defined by claim 1, the method comprising:
- generating a test call to or through a real subscriber number of a real subscriber active in the telecommunication network;
- obtaining call data from the operator of the real subscriber and/or from a test probe whereto the real subscriber number of the real subscriber is temporarily forwarded during a time interval wherein the test call is made;
- extracting a received calling line identifier for the test call from the call data; and
- detecting presence of a bypass by analysis of the received calling line identifier.

Thus, the bypass detection method according to the invention relies on test calls to numbers of real subscriber, in the context of the present invention called "real subscriber numbers". These numbers may be randomly selected or may be selected more intelligently from a list of real subscriber numbers obtained from the operator. Anyhow, the test calls to such real subscriber numbers are difficult to detect by bypass operators that implement counter-detection measures because the real subscriber number that is used for a test call will typically not be blacklisted: the real subscriber number receives an occasional single test call and may then even be excluded for test calls for some time. Even if it would be blacklisted as a result of a detected test call, such counter-detection measure would be ineffective because the amount of real subscriber numbers that can be used for test calls is huge and so is the number of potential test routes: the system according to the present invention is no longer dependent on a limited list of virtual numbers or a list that may be leaked to the bypass operator as a result of which the bypass operator can avoid bypass activity on routes to these virtual numbers and remain undetected. Further, the real subscriber numbers used for test calls will appear on white lists of bypass operators. In particular if the real subscriber numbers are intelligently chosen - e.g. real subscribers that frequently receive international calls - the probability that the real subscriber numbers used for test calls also appear on the white list that a bypass operator is managing for his bypass activity, is high. The use of test calls by the method according to the present invention further brings the advantage that control is kept over the origin of the test calls, as a result of which the CLI or portions of the CLI that must be received by the receiving test probe are known, and control is kept over the timing of the test calls. The latter is important as the method according to the invention further must obtain the received calling line identifier for the test call. This received calling line identifier may be obtained from the operator of the real subscriber number that receives the test call in situations where the operator is prepared to share certain call data including received calling line identifiers. Knowledge of the timing of the test call is then required to identify the CLI in the call data received from the operator. Alternatively or complementarily, the received CLI may be obtained from a test probe whereto the real subscriber number is temporarily forwarded during a time interval wherein the test call takes place. It is noticed that the received CLI in this case refers to the CLI that would have been received by the real subscription if its number was not configured in call forward mode. Since the real subscriber number is temporarily put in call forward mode, the real subscription actually does not receive any CLI. It is however assumed that the CLI does not change as a result of the call forward as a result of which the test probe will receive this CLI and will be able to report this CLI to the test call platform. During such time interval, which preferably is as short as possible to minimize the service interruption for the real subscriber and to minimize the risk that interfering calls from genuine subscribers to the real subscriber terminate to the test probe, the real subscriber number is forwarded to the test probe. The forward shall preferably be an unconditional call forward to reduce the time needed for the test call, although the present invention is not limited thereto and may cover variants such as call forward on no reply or other call forward modes. The signalling of calls to the real subscriber number is not re-routed and/or monitored and/or intercepted during the time interval of the test. Consequently, no gateway needs to be installed in the signalling path of the telecommunication network.

In embodiments of the method for detection of a bypass of an interconnect to a telecommunication network according to the present invention defined by claim 2, the call data are obtained from the operator of the real subscriber.

In order to be able to determine if bypass activity took place on the test call to a real subscriber number, the received calling line identifier is analysed in the method according to the present invention. One way to obtain this received calling line identifier relies on information received from the operator of the real subscriber that is called in the test call. This can be the operator of the network where the real subscriber is called, i.e. the home network operator, or it can be the visited network operator of the real subscriber in case the real subscriber is roaming in a visited network at the time the test call is made.

In an embodiment of the method for detection of a bypass of an interconnect to a telecommunication network according to the present invention, defined by claim 3,
the call data comprise Call Data Records; and
detecting presence of a bypass comprises:
- CDR matching in order to determine a CDR matching with the test call;
- using a calling line identifier in the CDR matching with the test call to identify the bypass.

Indeed, the operator of the real subscriber that receives the test call may provide access to the Call Data Records or CDRs that are automatically generated for all calls, e.g. for billing purposes. The CDRs corresponding to the calls terminating to the real subscriber number, commonly called the Terminating CDR, contain the received calling line identifier or CLI, usually in a field named "calling party", "A party", "originating party" or "last forwarding party", and in case of a signalling monitoring CDR could also include extensive time information such as IAM time, ANM time, REL time or similar in other signalling techniques (e.g. SIP). In such CDR the real subscriber number would usually be in a field named "called party", "B party", "terminating party", or in case the real subscriber would have a forward state in a field "forwarding party". The time information can be used to determine which CDR is matching with the test call. A CDR matching algorithm that enables to determine which CDR is matching with the test call may for instance operate according to the principles described in paragraphs [0101]-[0111] of US 2006/0045248A1 for real subscriber calls. Once the CDR matching with the test call has been determined, analysis of the CLI in the CDR enables to identify bypass operation: if the CLI belongs to the numbering plan of the network wherein the test call is received whereas the test call is made from outside this network, if the CLI does not correspond to the CLI of the origin of the test call, ..., arbitrage or bypass took place. The CLI analysis to determine bypass hence may for instance comprise verifying if the calling line identification belongs to the numbering plan of the network where the test call is received, verifying the country code, or alternate CLI analysis as for instance described in international patent application WO 2012/104283. In case of bypass in the test call, the test call could also be matched by the same methodology with the CDRs generated by the bypass number, i.e. an Originating CDR in this case. The real subscriber number will then correspond with the "called party" in such CDR and the received CLI will correspond to the "calling party" in such CDR. Usually, networks only generate CDRs for effective calls, i.e. calls that are answered. Thus, when relying on CDR data only, the test calls that the real subscribers have answered will be useful for the matching process and bypass detection. Networks could however also be configured to generate CDRs for call attempts in which case the method will be more efficient. Moreover, when call attempts also generate CDRs it becomes possible to avoid or reduce call costs as it would be sufficient to let a test call ring once or a couple of times to obtain a CDR with CLI that can be analysed, such that on average less test calls will be answered and generate costs.

As further specified in claim 4, the Call Data Records received from the operator of the real subscriber that receives the test call in the method for detection of a bypass of an interconnect to a telecommunication network according to the present invention, comprise one or more of:
- CDRs automatically generated by the operator for billing purposes; or
- CDRs of call attempts generated for not connected calls by the operator; or
- CDRs made accessible by the operator for profiling purposes; or
- CDRs or similar records generated by signalling monitoring systems.

Thus, in addition to or as an alternative to the CDRs that are automatically generated by the operator for connected calls and that are used for billing purposes, the operator may also generate CDRs for not connected calls or so called call attempts. If this is the case, the method according to the present invention can be applied for not connected test calls as a result of which connection costs can be avoided and the bypass detection method according to the present invention can be performed with reduced costs. It is also possible that the operator of the real subscriber that receives the test call already provides access to his CDRs for different purposes, e.g. profiling as is done in FMS systems. In such case, no additional interface is required to obtain CDRs from operator to perform the CDR matching with the test call as required in the method under the present invention.

In embodiments of the method for detection of a bypass of an interconnect to a telecommunication network according to the present invention, defined by claim 5, the call data comprise signalling data for calls and/or call attempts to the real subscriber number of the real subscriber, obtained from a signalling tap in the telecommunication network.

Hence, as an alternative to CDRs or in addition to CDRs, signalling tapped in the network where the real subscriber receives the test call may be made accessible and contain a calling line identifier that can be analysed to determine if the test call was subject to bypass activity. For example, verifying if the calling line identification belongs to the numbering plan of the network where the test call is received, verifying the country code, or alternate CLI analysis as for instance described in international patent application WO 2012/104283, will enable to detect bypass. Signalling has the advantage that the messages are available for all calls, also call attempts.

In embodiments of the method for detection of a bypass of an interconnect to a telecommunication network according to the present invention, defined by claim 6, the call data comprise signalling data for calls and/or call attempts to the real subscriber number of the real subscriber, obtained through lawful interception.

Thus, a further alternative resides in receiving call data obtained through lawful interception, i.e. standardised technology relying on the 3GPP protocol that enables to monitor calls to/from a specified subscriber number. Lawful interception is typically used by police or intelligence services, but the technology may be exploited as well to monitor a subscriber number during a time interval wherein a test call will be made to that subscriber number. The information obtained through lawful interception contains the received calling line identifier of the test call and consequently is again useful for identifying bypass activity according to the method underlying the present invention.

In alternative embodiments of the method for detection of a bypass of an interconnect to a telecommunication network according to the present invention, defined by claim 7, call data are obtained from a test probe in the telecommunication network whereto the real subscriber number of the real subscriber is temporarily forwarded during a time interval wherein the test call is made without intercepting the signalling of calls to the real subscriber number at a gateway.

Indeed, in situations where call data cannot be obtained from the network operator of the real subscriber or in addition to such call data, the method according to the present invention may rely on information received from a receiver probe whereto to real subscriber number is temporarily forwarded. The call forward does not involve intercepting signalling as a result of which not only the test call but also interfering calls to the real subscriber number in the time interval will be forwarded to the receiving probe. The method according to the present invention hence involves discriminating the calling line identifier received as a result of the test call from calling line identifiers received as a result of interfering calls, and therefore may rely on timing information. Once the calling line identifier received as a result of the test call has been identified, this calling line identifier can be analysed to determine if bypass activity took place on the test call. The use of call forwarding to a receiver probe has as advantage that no access is required to CDRs or signalling information of the operator of the real subscriber number. The downside is that the real subscriber must temporarily be configured in call forward mode, for a limited time interval wherein the test call will take place. This implies that the real subscriber's service will be interrupted, typically for a time interval of a few seconds up to a minute. It is assumed that the CLI is not changed by the call forwarding and that the CLI thus identifies the originating party of the call rather than the forwarding party. This is the case in most networks.

In embodiments of the method for detection of a bypass of an interconnect to a telecommunication network according to the present invention, defined by claim 8, temporarily forwarding the real subscriber number of the real subscriber to the test probe comprises:
- transmitting a command to a Home Location Register or Visited Location Register of the telecommunication network via an application programming interface of the telecommunication network wherein the command enables to configure call forwarding of the real subscriber number to the test probe.

Indeed, one way to temporarily configure the real subscriber number that will be addressed in the test call in call forward mode makes use of an API or application programming interface of the operator of the real subscriber. The operator may foresee such API to enable a third party responsible for scheduling, executing and analysing test calls for bypass detection to configure call forwarding in its HLR or Home Location Register for all its real subscribers or a selection of real subscribers.

In alternate embodiments of the method for detection of a bypass of an interconnect to a telecommunication network according to the present invention, defined by claim 9, temporarily forwarding the real subscriber number of the real subscriber to the test probe comprises:
- transmitting a specific USSD code from the test probe or any subscription managed by the test call system to a USSD gateway in the telecommunication network, accompanied by an identification of the real subscriber number, the specific USSD code triggering specific logic to configure call forwarding; and
- transmitting a command from the USSD gateway to a Home Location Register or Visited Location Register of the telecommunication network, wherein said command enables to configure call forwarding for the real subscriber number to the test probe, and
wherein the method further comprises transmitting instructions from the test probe to make the test call.

A USSD gateway or USSD server is a device present in GSM networks to receive and interpret USSD messages from GSM handsets. USSD is a real-time, session based protocol that conveys messages or commands to query information or to trigger services over GSM signalling channels. Advantageous embodiments of the present invention exploit the USSD protocol to enable a test probe whereto a real subscriber number must be forwarded temporarily, itself to instruct the call forwarding and to instruct execution of the test call. Thereto, a specific USSD code must be created, e.g. "*199#*", and this specific USSD code must be sent from the test probe (or any subscription managed by the test call system) to the USSD gateway together with an identification of the real subscriber number that must be configured in call forward mode to the test probe. The entire USSD message sent by the test probe to the USSD gateway may for instance be as follows:
*199#MSISDNa*#MSISDNb
Herein:
*199#* represents the specific USSD code that enables a third party, in this case the test probe, to request call forward to itself; and
MSISDNa represents the identification of the real subscriber whose number will temporarily be forwarded to the test probe sending the USSD message (or alternate subscription that receives the test call in case the USSD message is sent from a different subscription). To avoid misuse, use of the specific USSD code may be restricted to the test probe or to a limited number of subscriptions that are used by the test call system.
MSISDNb represents the subscription that will receive the test call. In case MSISDNb is the one that sends the USSD message, than it may not be necessary to include #MSISDNb in the USSD string as the USSD gateway will know that the USSD message was sent by MSISDNb.
Likely, the USSD message shall also contain an explicit mentioning of the subscription sending the USSD message. The USSD gateway in this embodiment of the present invention must be supplemented with logic able to interpret the specific USSD code, and able to instruct the Home Location Register to configure call forward for the real subscriber a to the test probe upon receipt of the specific USSD code. The USSD gateway thereto typically uses the SMPP protocol. Once this is done, the USSD gateway may confirm to the test probe via another USSD message that the call forwarding is configured for the real subscriber a, as a result of which the test probe can instruct to execute the test call, either directly to the origin of the test call or to the controller that schedules and monitors the test calls. The embodiment is advantageous because the test probe itself controls the timing of the call forwarding and test call execution as a result of which service interruption for the real subscriber can be minimized.

According to an optional aspect, defined by claim 10, the method for detection of a bypass according to the present invention further comprises:
- transmitting a specific call forward deactivation USSD code from the test probe or any subscription managed by the test call system to said USSD gateway after the test call; and
- transmitting a command from the USSD gateway to the Home Location Register or Visited Location Register of the telecommunication network, wherein the command enables to deactivate the call forwarding of the real subscriber number to the test probe.

Thus, in embodiments where a specific USSD is sent from the test probe to a USSD gateway to activate call forwarding, the test probe may sent a second specific USSD code after the test call has taken place to instruct the USSD gateway to deactivate the call forward for the real subscriber whose number was used in the test call. The USSD gateway is adapted to interpret the second USSD code and to activate logic that commands the Home Location Register or Visited Location Register, e.g. via the SMPP protocol, to deactivate the call forwarding for the real subscriber number.

In further alternate embodiments of the method for detection of a bypass of an interconnect to a telecommunication network according to the present invention, defined by claim 11, temporarily forwarding the real subscriber number of the real subscriber to the test probe comprises:
- transmitting an SMS message with specific code from the test probe or any subscription managed by the test call system to an SMS server in the telecommunication network, accompanied by an identification of the real subscriber number; and
- transmitting a command from the SMS server to a Home Location Register or Visited Location Register of the telecommunication network, wherein the command enables to configure call forwarding for the real subscriber number to the test probe, and
wherein the method further comprises transmitting instructions from the test probe to make the test call.

Thus, similar to USSD messages, the present invention may be implemented using SMS messages. The test probe whereto a real subscriber number must be temporarily forwarded (or any subscription managed by the test call system) may send an SMS message with a specific code and identification of the real subscriber number that must be configured in call forward mode to the test probe. The SMS message is sent to an SMS service that hosts logic to interpret the SMS message and to instruct the Home Location Register to configure call forwarding for the real subscriber number. The test probe may be notified by the SMS service that the call forwarding is configured and the test probe may await this notification to transmit instructions for executing the test call. These instructions may be sent to the controller in the test platform or directly to the origin of the test call if the test probe is knowledgeable on the origin. Just like in the implementation with USSD codes, the test probe may send a second SMS message with second specific code indicating to the SMS service that the call forwarding for the real subscriber number involved in the test may be deactivated.

In further alternate embodiments of the method for detection of a bypass of an interconnect to a telecommunication network according the invention, defined by claim 12, temporarily forwarding the real subscriber number of the real subscriber to the test probe comprises:
- transmitting a command with specific code from the test probe or any subscription managed by the test call system to an Intelligent Network service in the telecommunication network, accompanied by an identification of the real subscriber number wherein the real subscriber number is a prepaid number; and
- transmitting a command from the Intelligent Network service to a Home Location Register or Visited Location Register of the telecommunication network, wherein the command enables to configure call forwarding for the real subscriber number to the test probe, and
wherein the method further comprises transmitting instructions from the test probe to make the test call.

Indeed, for prepaid numbers, the present invention may be implemented using an Intelligent Network service. The test probe whereto a real, prepaid subscriber number must be temporarily forwarded (or any subscription managed by the test call system) may send a message to an IN service with a specific code and identification of the real subscriber number that must be configured in call forward mode to the test probe. The message is sent to an IN service that hosts logic to interpret the message and to instruct the Home Location Register to configure call forwarding for the real, prepaid subscriber number. The test probe may be notified by the IN service that the call forwarding is configured and the test probe may await this notification to transmit instructions for executing the test call. These instructions may be sent to the controller in the test platform or directly to the origin of the test call if the test probe is knowledgeable on the origin. Just like in the implementation with USSD codes, the test probe may send a second message with second specific code indicating to the IN service that the call forwarding for the real, prepaid subscriber number involved in the test may be deactivated.

In further alternate embodiments of the method for detection of a bypass of an interconnect to a telecommunication network according to the present invention, defined by claim 13, wherein temporarily forwarding the real subscriber number of the real subscriber to the test probe comprises transmitting a command to a Home Location Register or Visited Location Register of the telecommunication network via a signalling server of the telecommunication network wherein the command enables to configure call forwarding of the real subscriber number to the test probe.

Thus, similar to USSD messages or SMS messages, the present invention may be implemented using signalling messages, for instance MAP signalling to activate the call forward. Indeed, also MAP signalling includes possibilities to change subscriber data. Whereas these possibilities are normally restricted to use within a network, they can be opened up to be used by an external party such as a test call system. Security mechanisms can be implemented to only allow such signalling messages from certain origins like a test call system. The test probe whereto a real subscriber number must be temporarily forwarded (or any subscription managed by the test call system) may send a signalling message with a specific code and identification of the real subscriber number that must be configured in call forward mode to the test probe. The signalling message is sent to a signalling server that hosts logic to interpret the signalling message and to instruct the Home Location Register to configure call forwarding for the real subscriber number. The test probe may be notified by the signalling server that the call forwarding is configured and the test probe may await this notification to transmit instructions for executing the test call. These instructions may be sent to the controller in the test platform or directly to the origin of the test call if the test probe is knowledgeable on the origin. Just like in the implementation with USSD codes or SMS, the test probe may send a second signalling message with second specific code indicating to the signalling server that the call forwarding for the real subscriber number involved in the test may be deactivated.

Optionally, as defined by claim 14, the method for detection of a bypass of an interconnect to a telecommunication network according to the present invention further comprises:
- configuring a subscription coupled to the test probe in the telecommunication network with an 0800 profile or alternate free phone profile.

When the subscription coupled to the test probe is configured with a free phone profile, all calls forwarded thereto by real subscribers whose numbers are used for the test calls can be answered without connection costs. Answering the calls makes it possible to discriminate test calls from interfering calls because test calls can for instance be used to transfer a predetermined sequence of DTMF tones receipt of which can be verified by the receiving test probe.

It is noticed that interfering calls to the real subscriber during the time interval wherein call forwarding is configured for the real subscriber number may be answered with a message informing the caller that the subscriber he/she tried to call is temporarily not reachable. The caller consequently may be prompted to call back at a later time which improves the user experience in comparison to a situation where the receiving test probe does not pick-up the call or answers the call without play-back of a message.

According to yet another optional aspect defined by claim 15, the method for detection of a bypass of an interconnect to a telecommunication network according to the present invention further comprises:
- transmitting a specific code as part of a USSD command, SMS message, IN message or signalling message to respectively a USSD gateway, SMS server, IN service or signalling server to obtain the call forward state of the real subscriber number in order to be able to restore the call forward state or to abandon the test.

Indeed, before configuring call forward from a real subscriber number to the test probe, the method according to the invention preferably obtains and memorizes the call forward state, i.e. the type of call forward and the call forward number, such that the call forward state can be restored after the test call. This way, the real subscriber whose number is used for the test call will return to a state and settings identical to the ones before the call forward was configured.

Optionally, in the method for detection of a bypass of an interconnect to a telecommunication network according to the present invention, as defined by claim 16, temporarily forwarding the real subscriber to the test probe comprises either one of:
- forwarding the real subscriber number to the test probe for a limited, predetermined time interval;
- forwarding the real subscriber number to the test probe until the test call is completed; or
- forwarding the real subscriber number to the test probe until the test call is completed or a predetermined timer expires, whichever occurs first.

Thus, the time interval wherein calls are forwarded from the real subscriber number to the test probe may be a fixed time interval, e.g. 60 seconds, may be a time interval the length of which depends on when the test call is completed, or may be terminated by the test call until a certain timer of e.g. 60 seconds expires earlier. The first and third implementation have the advantage that the call forward cannot last endless in case the test call for some reason is not completed.

Further optionally, as defined by claim 17, embodiments of the method for detection of a bypass of an interconnect to a telecommunication network according to the present invention further comprise:
- selecting the real subscriber number of the real subscriber from an intelligent list of real subscribers received from the operator of the telecommunication network.

Following another optional aspect of the method for detection of a bypass of an interconnect to a telecommunication network according to the present invention, defined by claim 18, the intelligent list comprises subscriber numbers of real subscribers of the telecommunication network that in recent past received an amount of international calls exceeding a certain threshold.

Real subscribers that recently made international calls have a higher chance to appear on white lists where bypass operators concentrate their activity on. Consequently, using such real subscribers that recently received international calls for test calls increases the probability that bypass activity will be detected via the test calls.

Also optionally, as defined by claim 19, the intelligent list comprises subscriber numbers of real subscribers of the telecommunication network that recently unsubscribed from the telecommunication network.

Real subscribers that recently unsubscribed can be used for test calls without service interruption for the subscriber who no longer uses this number. Such real subscriber numbers may still appear on white lists of bypass operators so the fact they recently unsubscribed does not affect the chances that bypass activity will take place on routes thereto.

As further specified by claim 20, in embodiments of the method for detection of a bypass of an interconnect to a telecommunication network according to the present invention, the intelligent list comprises subscriber numbers of real subscribers of the telecommunication network that were never before configured in call forward mode.

Real subscriber numbers that were never before configured in call forward mode have the advantage that test efficiency is maximised as it may not be desirable to use real subscriber numbers that are in forward mode as this would require to retrieve and restore the original forward situation.

In embodiments of the method for detection of a bypass of an interconnect to a telecommunication network according to the present invention, defined by claim 21, certain high profile real subscribers of the telecommunication network have been removed from the intelligent list.

Indeed, although high profile subscribers such as a president, ministers, senators, major corporate clients, etc. may frequently receive international calls and therefore appear on white lists of bypass operators, one may wish to avoid temporarily interrupting the service for such high profile subscribers and therefore exclude them from the list of real subscriber numbers that is used for test calls.

The method for detection of a bypass of an interconnect to a telecommunication network according to the present invention, as defined by claim 22 further optionally comprises:
- sending a message to the real subscriber number to inform the real subscriber that his number will temporarily be out of service for a test.

This way, the real subscriber whose number is temporarily used for bypass detection based on test calls is made aware thereof. The real subscriber consequently knows that his number will be temporarily non-reachable.

In an embodiment of the method for detection of a bypass of an interconnect to a telecommunication network according to the present invention, defined by claim 23, approval is requested from the real subscriber to perform the test.

Thus, the real subscriber may be consulted before his number is used for bypass detection and the real subscriber may be given the chance to approve or disapprove interrupting his service temporarily and using his number for a test call. Such consultation could be done by UUSD or SMS and could originate from the same subscription that also initiates the setting of the call forward mode.

Further optionally, as defined by claim 24, the method for detection of a bypass of an interconnect to a telecommunication network according to the present invention further comprises:
- sending a message or a certain credit to the real subscriber after the test.

To motivate the real subscriber to approve using his number for bypass detection or to compensate him/her, the subscriber may be given some reward after the test is completed. The reward may be a "thank you" message informing the subscriber that the test is over and his service is restored, or it may be a financial reward, e.g. a coupon, call credit, a rebate on his invoice, etc.

In addition to a method as defined by claim 1, the present invention also relates to a system for detection of a bypass of an interconnect to a telecommunication network, defined by claim 25, the system comprising:
- means adapted to originate a test call to or through a real subscriber number of a real subscriber of the telecommunication network; and
- a control system configured to:
   - control initiation of the test call to or through the real subscriber number;
   - receive call data from the operator of the real subscriber number and/or from a test probe whereto said real subscriber number of the real subscriber is temporarily forwarded during a time interval wherein the test call is made;
   - extract a received calling line identifier for the test call from the call data; and
   - detect presence of a bypass by analysis of the received calling line identifier.

Embodiments of the system for detection of a bypass of an interconnect to a telecommunication network according to the present invention, defined by claim 26, comprise:
- a test probe in the telecommunication network whereto the real subscriber number of the real subscriber is temporarily forwarded during a time interval wherein the test call is made without intercepting the signalling of calls to the real subscriber number at a gateway.

Embodiments of the system for detection of a bypass of an interconnect to a telecommunication network according to the present invention, defined by claim 27, further comprise:
- an application programming interface of the telecommunication network adapted to transmit a command to a Home Location Register or Visited Location Register of the telecommunication network, wherein the command enables to configure call forwarding of the real subscriber number to the test probe.

Alternate embodiments of the system for detection of a bypass of an interconnect to a telecommunication network according to the present invention, defined by claim 28, further comprise a USSD gateway, wherein:
- the test probe is further adapted to transmit a specific USSD code to the USSD gateway in the telecommunication network, accompanied by an identification of the real subscriber number, the specific USSD code triggering specific logic to configure call forwarding; and
- the USSD gateway is further adapted to transmit, upon receipt of the specific USSD code, a command to a Home Location Register or Visited Location Register of the telecommunication network, wherein the command enables to configure call forwarding for the real subscriber number to the test probe; and
- the test probe is further controlled to transmit instructions to make the test call.

Further alternate embodiments of the system for detection of a bypass of an interconnect to a telecommunication network according to the present invention, defined by claim 29, further comprise an SMS service, wherein:
- the test probe is adapted to transmit an SMS message with specific code to the SMS server in the telecommunication network, accompanied by an identification of the real subscriber number; and
- the SMS service is adapted to transmit, upon receipt of the SMS message with specific code, a command to a Home Location Register or Visited Location Register of the telecommunication network, wherein the command enables to configure call forwarding for the real subscriber number to the test probe; and
- the test probe is further controlled to transmit instructions to make the test call.

Still other alternate embodiments of the system for detection of a bypass of an interconnect to a telecommunication network according to the present invention, defined by claim 30, further comprise an Intelligent Network service, wherein:
- the test probe is adapted to transmit a command with specific code to the Intelligent Network service in the telecommunication network, accompanied by an identification of the real subscriber number wherein the real subscriber number is a prepaid number; and
- the Intelligent Network service is adapted to transmit, upon receipt of the command with specific code, a command to a Home Location Register or Visited Location Register of the telecommunication network, wherein the command enables to configure call forwarding for the real subscriber number to the test probe; and
- the test probe is further controlled to transmit instructions to make the test call.

Yet other alternate embodiments of the system for detection of a bypass of an interconnect to a telecommunication network according to the present invention, defined by claim 31, further comprise a signalling server, wherein the signalling server is adapted to transmit a command to a Home Location Register or Visited Location Register of the telecommunication network, wherein the command enables to configure call forwarding of the real subscriber number to the test probe.

### Brief Description of the Drawings

Fig. 1 illustrates a first embodiment of the method and system for bypass detection according to the present invention;
Fig. 2 illustrates a second embodiment of the method and system for bypass detection according to the present invention;
Fig. 3 illustrates a third embodiment of the method and system for bypass detection according to the present invention;
Fig. 4 illustrates a fourth embodiment of the method and system for bypass detection according to the present invention;
Fig. 5 illustrates a fifth embodiment of the method and system for bypass detection according to the present invention;
Fig. 6 illustrates a sixth embodiment of the method and system for bypass detection according to the present invention;
Fig. 7 illustrates a seventh embodiment of the method and system for bypass detection according to the present invention; and
Fig. 8 illustrates a computing system suitable for hosting the system for bypass detection according to the present invention and suitable for implementing the method for bypass detection according to the present invention.

### Detailed Description of Embodiment(s)

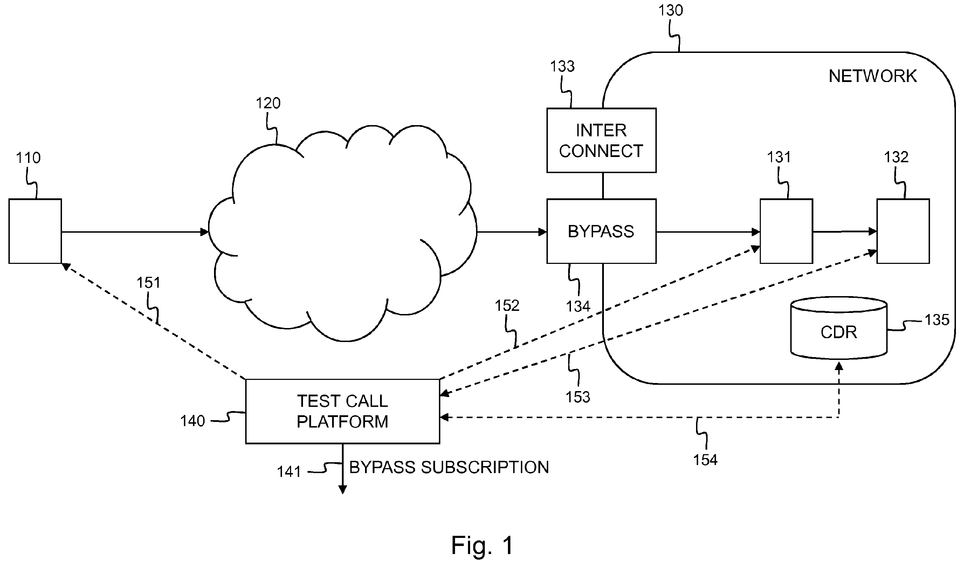

Fig. 1 shows a first embodiment of a system 140 for detection of a bypass 134 of an interconnect 133 to a telecommunication network 130 that operates according to the present invention. The system 140 is a test call platform or TCG system that schedules tests calls and instructs test probes to originate such test calls at specific time instances. In Fig. 1, test call platform 140 sends instructions 151 to test probe 110 to generate a test call at a specified time to a number of a real subscriber 131, the so called real subscription number of a real subscriber that is active in network 130 at the point in time the test call is made. The test call platform 140 further The off-net test call originating from test probe 110, e.g. an end-user facility 110 in a network different from the telecommunication network 130, e.g. a smartphone equipped with a SIM card making a call to a number of a real subscriber 131 in telecommunication network 130, i.e. its home network or a visited network, is supposed to pass through the interconnect facility 133 between the network where test probe 110 is located and network 130 or between any intermediate operator's network 120 and network 130. The bypass 134 however may intercept the call from test probe 110 to the number of the real subscriber 131, setup an on-net call from the bypass 134 to the real subscription 131 in the network 130.

After the test call is made, the test call platform 140 may consult the Call Data Record database or CDR database 135 of the network 130 in order to extract from the CDR stored for the test call the Calling Line Identifier or CLI received by the real subscription 131. This is indicated by 154 in Fig. 1. Thereupon, the CLI is analysed using known techniques to determine bypass from CLI analysis. If it belongs for instance to the numbering plan of network 130, test call platform 140 shall identify the subscription corresponding to that CLI as a bypass subscription 141 of bypass 134. The test call platform 140 reports such bypass subscription 141 to the operator of network 130 in order to enable the operator to deactivate such subscription.

Alternatively, the test call platform 140 may configure the real subscription 131 temporarily in call forward mode, as is indicated by 152 in Fig. 1. As a result, all calls to real subscription 131 will be forwarded to a test probe 132 in network 130 that is controlled by the test call platform. When the time interval is kept short and no interfering calls arrive at the real subscription 131, only the test call from test probe 110 to real subscription 131 is forwarded to test probe 132. Test probe 132 thereupon can be consulted by test call platform 140 such that test call platform 140 obtains the CLI received by test probe 132. This is indicated by 153 in Fig. 1. Again, the test call platform 140 can analyse the CLI, e.g. compare it with the numbering plan of the network 130 or country wherein the network 130 is located, to detect that the received CLI belongs to a bypass 134. If this is the case, the bypass subscription 141 is reported to the operator of network 130 to enable the operator to take this bypass subscription 141 out of operation.

It is noticed, that the test call platform 140 also may combine consulting the CDR database 135 with call forwarding from the real subscription 131 that is addressed on the test call to a test probe 132 under control of the test call platform 140.

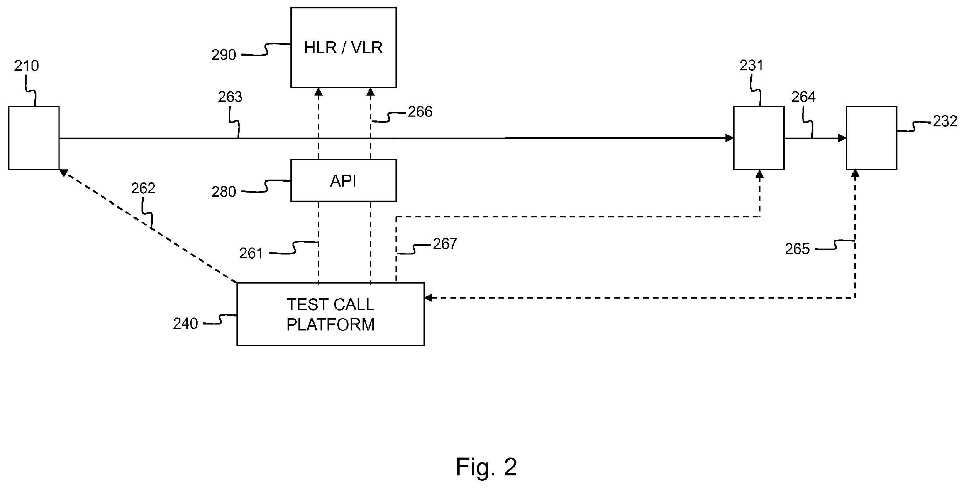

Fig. 2 illustrates an implementation of the system according to the invention wherein the test call platform 240 makes use of an application programming interface or API 280 to temporarily set call forwarding, for instance unconditional call forwarding, for real subscription 231 in the Home Location Register or HLR 290 of the operator of the real subscription 231. Via the API 280, the test call platform 240 sends instructions 261 to HLR 290 to activate unconditional call forward for real subscription 231 to the test probe 232. Thereafter, the test call platform 240 sends instructions 262 to probe 210 to initiate a test call 263 to real subscription 231. As a result of the call forward mode, the test call 263 will be forwarded to test probe 232. This is indicated by 264 in Fig. 2. The call forward preferably will be an unconditional call forward to reduce the time needed to perform the test call. After the test call 263, 264, the test probe 232 will report the received CLI to the test call platform 240, as indicated by 265, and the test call platform 240 will analyse the CLI to detect bypass activity. The test call platform 240 sends instructions 266 to HLR 290 to deactivate the call forwarding as soon as the test call is performed, and sends a message 267 to the real subscription 231 to inform the subscription that its number is again reachable, and eventually reward the subscriber of that real subscription 231 with some credit.

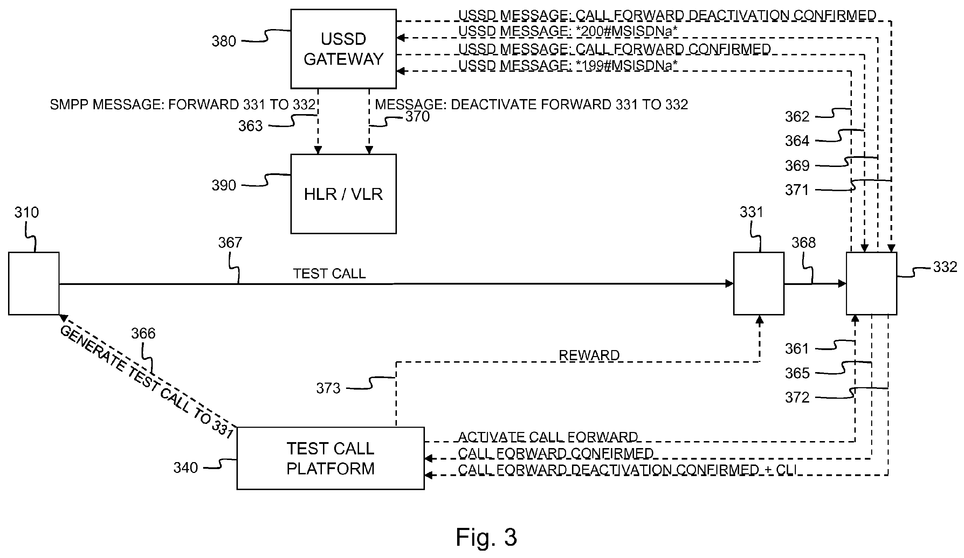

Fig. 3 illustrates a variant implementation of the method and system for bypass detection of the present invention involving a USSD gateway 380 to temporarily activate call forwarding for the real subscription 331 that is used for the test call. The test call platform 340 thereto sends instructions 361 to test probe 332 to activate call forwarding for real subscription 331. Upon receipt of these instructions 361, a first USSD message 362 is sent to USSD gateway 380. This first USSD message 362 contains a first specific USSD code, e.g. "*199#*", as well as an identification of the real subscription 331 that must be configured in call forward mode to the test probe 332. The entire USSD message 362 sent by the test probe 332 to the USSD gateway 380 hence looks as follows:
*199#MSISDNa*
Herein:
*199#* represents the specific USSD code that enables a third party, in this case the test probe 332, to request call forward to itself; and
MSISDNa represents the identification of the real subscription 331 whose number will temporarily be forwarded to the test probe 332 sending the USSD message.
The USSD message 362 may also contain an explicit mentioning of the subscription 332 sending the USSD message. In variant implementations where the USSD message 362 is sent from a different subscription that is controlled by the test call platform 340, the USSD message 362 shall contain an identification of the test probe subscription 332 whereto the real subscription 331 must be forwarded.

The USSD gateway 380 is a device present in the GSM network of the home network operator or visited network operator of subscription 331, able to receive and interpret USSD messages and able to connect with the Home Location Register or Visited Location Register HLR / VLR 390 of the home network operator or visited network operator of subscription 331. The USSD gateway 380 contains logic able to interpret the specific USSD code *199#*, and able to generate instructions 363 for the HLR / VLR 390 to configure call forward for the real subscriber 331 to the test probe 332 upon receipt of the specific USSD code *199#*. The USSD gateway thereto e.g. uses the SMPP protocol. Once this is done, the USSD gateway 380 sends a confirmation message 364 to the test probe 332, i.e. another USSD message confirming that the call forwarding from real subscription 331 to test probe 332 is configured. Thereupon, the test probe 332 informs the controller 340 that schedules and monitors the test calls that the requested call forward is implemented via confirmation message 365.

The test call platform 340 thereafter sends instructions 366 to test probe 310 to generate a test call 367 to real subscription 331. As a result of the call forward mode, the test call 367 will be forwarded to the test probe 332 as is indicated by 368 in Fig. 3.

As soon as the test call has taken place, the test probe 332 sends a second USSD message 369 to instruct the USSD gateway 380 to deactivate the call forward for the real subscription 331 whose number was used in the test call 367. This second USSD message 369 sent by test probe 332 contains a second specific USSD code, e.g. "*200#*", as well as an identification of the real subscription 331 whose call forward to the test probe 332 must be deactivated. The entire second USSD message 369 sent by the test probe 332 to the USSD gateway 380 may look as follows:
*200#MSISDNa*
Herein, *200#* represents the second specific USSD code that enables a third party, in this case the test probe 332, to request deactivation of call forward to itself. The USSD gateway 380 is able to interpret this second USSD message 369 and to activate logic that commands the HLR / VLR 390 via another message 370, to deactivate the call forwarding for the real subscription 331.

USSD gateway 380 thereupon sends a confirmation message 371 to test probe 332, e.g. another USSD message, to inform the test probe 332 that the call forwarding has been deactivated. Upon receipt of this confirmation 371, the test probe sends a confirmation 372 to the test call platform 340 informing the test call platform that the call forwarding for real subscription 331 has been deactivated. This confirmation message may contain the CLI received by test probe 332 in the test call 368 or a separate communication between test probe 332 and test call platform 340 may convey this CLI. Test call platform 340 shall analyse the CLI to detect bypass activity during the test call. Test call platform 340 can also inform the real subscription 331, e.g. via an SMS message 373, that its number is again reachable. The SMS message 373 may eventually contain information on a reward or compensation for the subscriber of real subscription 331.

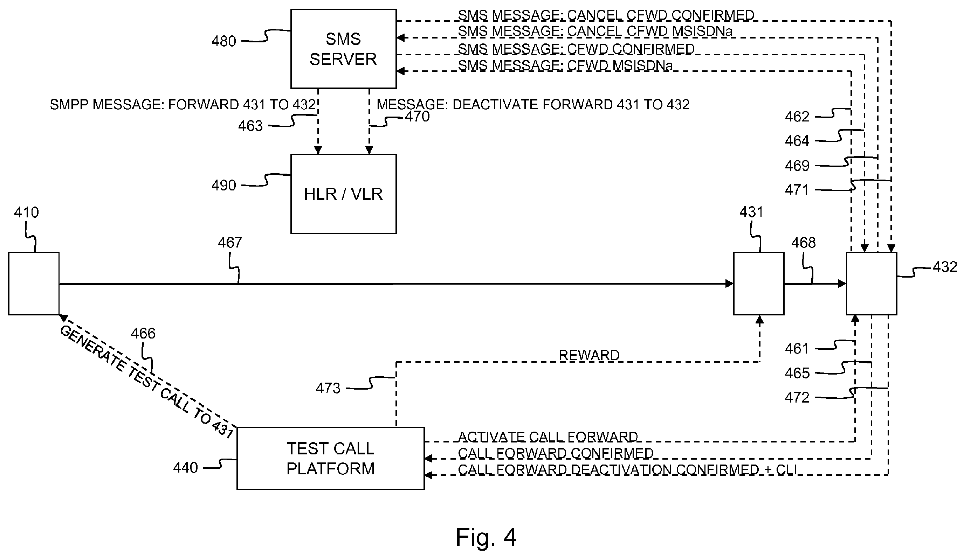

Fig. 4 illustrates a variant implementation of the method and system for bypass detection of the present invention involving a Short Message Service server or SMS server 480 to temporarily activate call forwarding for the real subscription 431 that is used for the test call. The test call platform 440 thereto sends instructions 461 to test probe 432 to activate call forwarding for real subscription 431. Upon receipt of these instructions 461, a first SMS message 462 is sent to SMS server 480. This first SMS message 462 contains a first specific code, e.g. "CFWD<SPACE>", as well as an identification of the real subscription 431 that must be configured in call forward mode to the test probe 432. The entire SMS message 462 sent by the test probe 432 to the SMS server 480 hence looks as follows:
CFWD MSISDNa
Herein:
CFWD represents the specific code that enables a third party, in this case the test probe 432, to request call forward to itself; and
MSISDNa represents the identification of the real subscription 431 whose number will temporarily be forwarded to the test probe 432 sending the SMS message 462.
It is noticed that the SMS message 462 may also contain an explicit mentioning of the subscription 432 sending the SMS message, although the SMS server 480 is able to determine the subscription number used by test probe 432 to send the SMS 462. In variant implementations where the SMS message 462 is sent from a different subscription that is controlled by the test call platform 440, the SMS message 462 shall contain an identification of the test probe subscription 432 whereto the real subscription 431 must be forwarded.

The SMS server 480 is a device present in the GSM network of the home network operator or visited network operator of subscription 431, able to receive and interpret SMS messages and able to connect with the Home Location Register or Visited Location Register HLR / VLR 490 of the home network operator or visited network operator of subscription 431. The SMS server 480 contains logic able to interpret the specific code "CFWD", and able to generate instructions 463 for the HLR / VLR 490 to configure call forward for the real subscriber 431 to the test probe 432 upon receipt of the specific code "CFWD". The SMS server 480 thereto e.g. uses the SMPP protocol. Once this is done, the SMS server 480 sends a confirmation message 464 to the test probe 432, i.e. another SMS message confirming that the call forwarding from real subscription 431 to test probe 432 is configured, for instance an SMS with content "CFWD CONFIRMED". Thereupon, the test probe 432 informs the controller 440 that schedules and monitors the test calls that the requested call forward is implemented via confirmation message 465.

The test call platform 440 thereafter sends instructions 466 to test probe 410 to generate a test call 467 to real subscription 431. As a result of the call forward mode, the test call 467 will be forwarded to the test probe 432 as is indicated by 468 in Fig. 3.

As soon as the test call has taken place, the test probe 432 sends a second SMS message 469 to instruct the SMS server 480 to deactivate the call forward for the real subscription 431 whose number was used in the test call 467. This second SMS message 469 sent by test probe 432 contains a second specific code, e.g. "CANCEL CFWD<SPACE>", as well as an identification of the real subscription 431 whose call forward to the test probe 432 must be deactivated. The entire second SMS message 469 sent by the test probe 432 to the SMS server 480 may look as follows:
CANCEL CFWD MSISDNa
Herein, CANCEL CFWD represents the second specific code that enables a third party, in this case the test probe 432, to request deactivation of call forward to itself. The SMS server 480 is able to interpret this second SMS message 469 and to activate logic that commands the HLR / VLR 490 via another message 470, to deactivate the call forwarding for the real subscription 431.

SMS server 480 thereupon sends a confirmation message 471 to test probe 432, e.g. another SMS message with content "CANCEL CFWD CONFIRMED", to inform the test probe 432 that the call forwarding has been deactivated. Upon receipt of this confirmation 471, the test probe sends a confirmation 472 to the test call platform 440 informing the test call platform that the call forwarding for real subscription 431 has been deactivated. This confirmation message may contain the CLI received by test probe 432 in the test call 468 or a separate communication between test probe 432 and test call platform 440 may convey this CLI. Test call platform 440 shall analyse the CLI to detect bypass activity during the test call. Test call platform 440 can also inform the real subscription 431, e.g. via another SMS message 473, that its number is again reachable. The SMS message 473 may eventually contain information on a reward or compensation for the subscriber of real subscription 431.

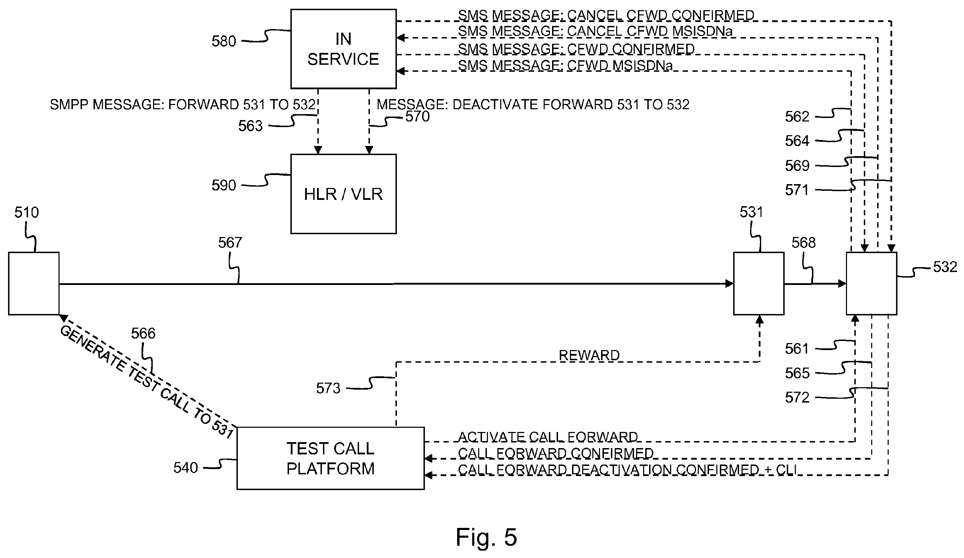

Fig. 5 illustrates a variant implementation of the method and system for bypass detection of the present invention involving an Intelligent Network Service or IN Service 580 to temporarily activate call forwarding for the real subscription 531 that is used for the test call and that is supposed to be a prepaid subscription. The test call platform 540 sends instructions 561 to test probe 532 to activate call forwarding for prepaid real subscription 531. Upon receipt of these instructions 561, a first SMS message 562 is sent to IN service 580. This first SMS message 562 contains a first specific code, e.g. "CFWD<SPACE>", as well as an identification of the prepaid real subscription 531 that must be configured in call forward mode to the test probe 532. It is noticed that as an alternative to SMS, the communication between test probe 532 and IN service 580 could rely on USSD messages or operate via an API. The entire SMS message 562 sent by the test probe 532 to the IN service 580 hence looks as follows:
CFWD MSISDNa
Herein:
CFWD represents the specific code that enables a third party, in this case the test probe 532, to request call forward to itself; and
MSISDNa represents the identification of the prepaid real subscription 531 whose number will temporarily be forwarded to the test probe 532 sending the SMS message 562.
It is noticed that the SMS message 562 may also contain an explicit mentioning of the subscription 532 sending the SMS message, although the IN service 580 is able to determine the subscription number used by test probe 532 to send the SMS 562. In variant implementations where the SMS message 562 is sent from a different subscription that is controlled by the test call platform 540, the SMS message 562 shall contain an identification of the test probe subscription 532 whereto the prepaid real subscription 531 must be forwarded.

The IN server 580 is a device present in the GSM network of the home network operator or visited network operator of subscription 531, able to manage services for prepaid subscriptions like 531 and able to connect with the Home Location Register or Visited Location Register HLR / VLR 590 of the home network operator or visited network operator of subscription 531. The IN service 580 contains logic able to interpret the specific code "CFWD", and able to generate instructions 563 for the HLR / VLR 590 to configure call forward for the prepaid real subscriber 531 to the test probe 532 upon receipt of the specific code "CFWD". The IN service 580 thereto e.g. uses the SMPP protocol. Once this is done, the IN service 580 sends a confirmation message 564 to the test probe 532, e.g. another SMS or USSD message confirming that the call forwarding from real subscription 531 to test probe 532 is configured, for instance an SMS with content "CFWD CONFIRMED". Thereupon, the test probe 532 informs the controller 540 that schedules and monitors the test calls that the requested call forward is implemented via confirmation message 565.

The test call platform 540 thereafter sends instructions 566 to test probe 510 to generate a test call 567 to prepaid real subscription 531. As a result of the call forward mode, the test call 567 will be forwarded to the test probe 532 as is indicated by 568 in Fig. 3.

As soon as the test call has taken place, the test probe 532 sends a second SMS message 569 to instruct the IN service 580 to deactivate the call forward for the prepaid real subscription 531 whose number was used in the test call 567. This second SMS message 569 sent by test probe 532 contains a second specific code, e.g. "CANCEL CFWD<SPACE>", as well as an identification of the prepaid real subscription 531 whose call forward to the test probe 532 must be deactivated. The entire second SMS message 569 sent by the test probe 532 to the IN service 580 may look as follows:
CANCEL CFWD MSISDNa
Herein, CANCEL CFWD represents the second specific code that enables a third party, in this case the test probe 532, to request deactivation of call forward to itself. The IN service 580 is able to interpret this second SMS message 569 and to activate logic that commands the HLR / VLR 590 via another message 570, to deactivate the call forwarding for the prepaid real subscription 531. As already mentioned here above, the communication between test probe 532 and IN service 580 may rely on USSD messaging instead of SMS.

IN service 580 thereupon sends a confirmation message 571 to test probe 532, e.g. another SMS message with content "CANCEL CFWD CONFIRMED", to inform the test probe 532 that the call forwarding has been deactivated. Upon receipt of this confirmation 571, the test probe 532 sends a confirmation 572 to the test call platform 540 informing the test call platform 540 that the call forwarding for prepaid real subscription 531 has been deactivated. This confirmation message 572 may contain the CLI received by test probe 532 in the test call 568 or a separate communication between test probe 532 and test call platform 540 may convey this CLI. Test call platform 540 shall analyse the CLI to detect bypass activity during the test call. Test call platform 540 can also inform the prepaid real subscription 531, e.g. via another SMS message 573, that its number is again reachable. The SMS message 573 may eventually contain information on a reward or compensation for the subscriber of prepaid real subscription 531.

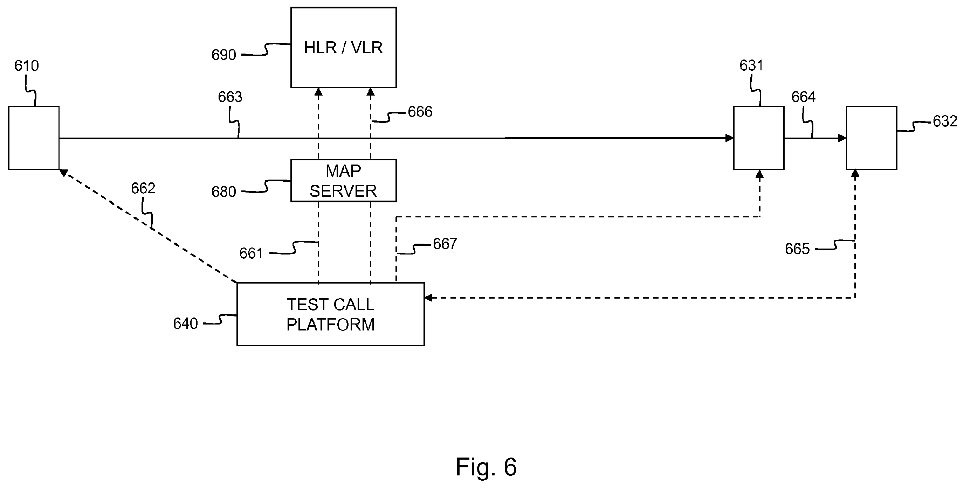

Fig. 6 illustrates an implementation of the system according to the invention wherein the test call platform 640 makes use of a MAP server 680 to temporarily set call forwarding, for instance unconditional call forwarding, for real subscription 631 in the Home Location Register or HLR 690 of the operator of the real subscription 631. Via the MAP server 680, the test call platform 640 sends instructions 661 to HLR 690 to activate unconditional call forward for real subscription 631 to the test probe 632. Thereafter, the test call platform 640 sends instructions 662 to probe 610 to initiate a test call 663 to real subscription 631. As a result of the call forward mode, the test call 663 will be forwarded to test probe 632. This is indicated by 664 in Fig. 6. The call forward preferably will be an unconditional call forward to reduce the time needed to perform the test call. After the test call 663, 664, the test probe 632 will report the received CLI to the test call platform 640, as indicated by 665, and the test call platform 640 will analyse the CLI to detect bypass activity. The test call platform 640 via the MAP server 680 sends instructions 666 to HLR 690 to deactivate the call forwarding as soon as the test call is performed, and sends a message 667 to the real subscription 631 to inform the subscription that its number is again reachable, and eventually reward the subscriber of that real subscription 631 with some credit.

The skilled person will appreciate, that as an alternative to the MAP server, embodiments of the present invention may be contemplated that rely on other signalling servers that are able to connect with the HLR and instruct the HLR to configure call forward on a given subscriber number.

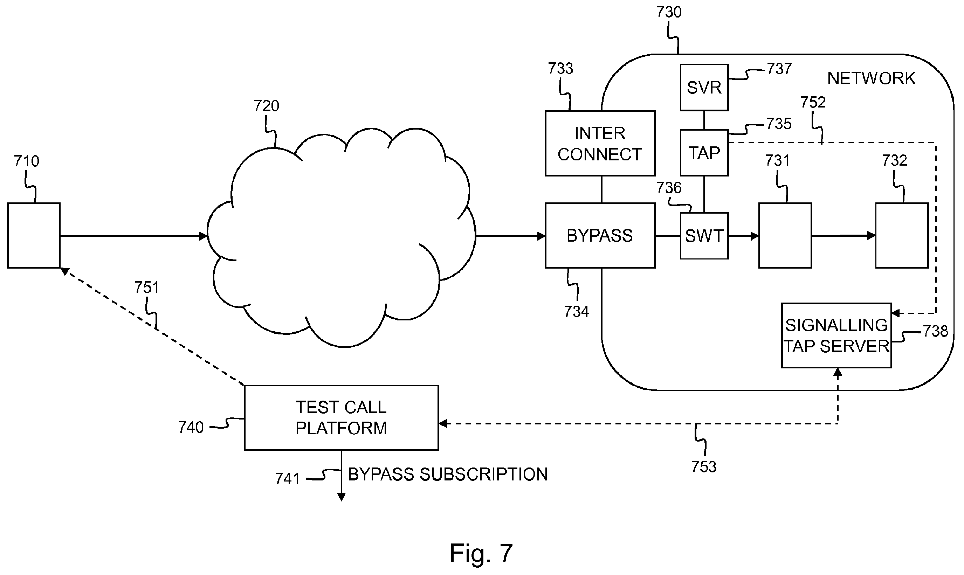

Fig. 7 shows an embodiment of a system 740 for detection of a bypass 734 of an interconnect 733 to a telecommunication network 730 that operates according to the present invention and relies on signalling tapping. The system 740 is a test call platform or TCG system that schedules tests calls and instructs test probes to originate such test calls at specific time instances. In Fig. 7, test call platform 740 sends instructions 751 to test probe 710 to generate a test call at a specified time to a number of a real subscriber 731, the so called real subscription number of a real subscriber that is active in network 730 at the point in time the test call is made. The off-net test call originating from test probe 710, e.g. an end-user facility 710 in a network different from the telecommunication network 730, e.g. a smartphone equipped with a SIM card making a call to a number of a real subscriber 731 in telecommunication network 730, i.e. its home network or a visited network, is supposed to pass through the interconnect facility 733 between the network where test probe 710 is located and network 730 or between any intermediate operator's network 720 and network 730. The bypass 734 however may intercept the call from test probe 710 to the number of the real subscriber 731, setup an on-net call from the bypass 734 to the real subscription 731 in the network 730.

In the network 730, a signalling tap 735 is installed. The signalling tap 735 is a passive tap (or a set of taps) that eavesdrops or sniffs on all signalling between network elements such as switches 736 and signalling servers 737, e.g. IN servers or STP servers. The tapped signalling or relevant portions thereof are stored by the signalling tap 735 in a signalling tap server 738, as is indicated by 752 in Fig. 7. These relevant portions represent call data that can be consulted by the test call platform 740, as indicated by 753 in Fig. 7. The call data stored in signalling tap server 738 shall at least contain the CLI, A party, B party and timestamps, but will in general contain much more information, often similar to CDR data. Hence, the CLI present in the test call from 710 to 731 can be consulted by the test call platform 740 and this CLI is analysed using known techniques to determine bypass from CLI analysis. If it belongs for instance to the numbering plan of network 730, test call platform 740 shall identify the subscription corresponding to that CLI as a bypass subscription 741 of bypass 734. The test call platform 740 reports such bypass subscription 741 to the operator of network 730 in order to enable the operator to deactivate such subscription.

Alternatively, the test call platform 740 may configure the real subscription 731 temporarily in call forward mode to test probe 732. As a result, all calls to real subscription 731 will be forwarded to a test probe 732 in network 730 that is controlled by the test call platform 740. When the time interval is kept short and no interfering calls arrive at the real subscription 731, only the test call from test probe 710 to real subscription 731 is forwarded to test probe 732. Test probe 732 thereupon can be consulted by test call platform 740 such that test call platform 740 obtains the CLI received by test probe 732. Again, the test call platform 740 can analyse the CLI, e.g. compare it with the numbering plan of the network 730 or country wherein the network 730 is located, to detect that the received CLI belongs to a bypass 734. If this is the case, the bypass subscription 741 is reported to the operator of network 730 to enable the operator to take this bypass subscription 741 out of operation.

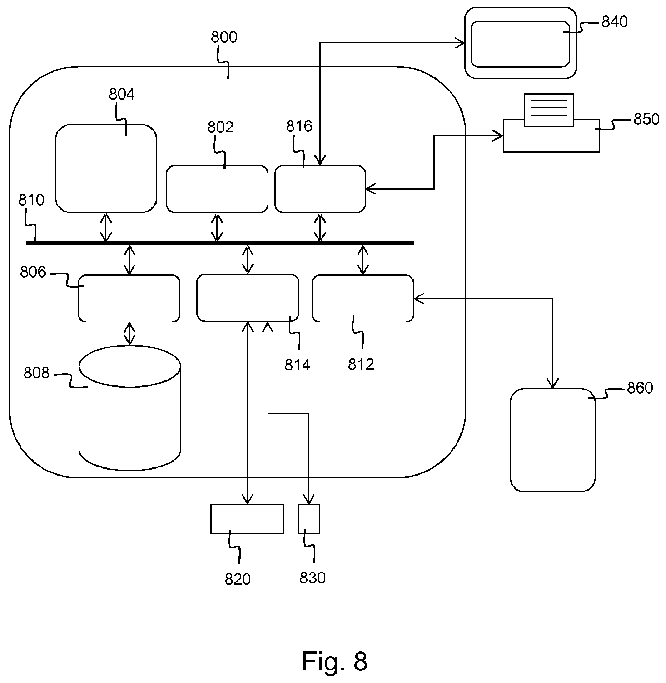

Fig.8 shows a suitable computing system 800 for hosting the system for bypass detection according to the invention, embodiments of which are drawn in Fig. 1 - Fig 7. Computing system 800 may in general be formed as a suitable general purpose computer and comprise a bus 810, a processor 802, a local memory 804, one or more optional input interfaces 814, one or more optional output interfaces 816, a communication interface 812, a storage element interface 806 and one or more storage elements 808. Bus 810 may comprise one or more conductors that permit communication among the components of the computing system. Processor 802 may include any type of conventional processor or microprocessor that interprets and executes programming instructions. Local memory 804 may include a random access memory (RAM) or another type of dynamic storage device that stores information and instructions for execution by processor 802 and/or a read only memory (ROM) or another type of static storage device that stores static information and instructions for use by processor 804. Input interface 814 may comprise one or more conventional mechanisms that permit an operator to input information to the computing device 800, such as a keyboard 820, a mouse 830, a pen, voice recognition and/or biometric mechanisms, etc. Output interface 816 may comprise one or more conventional mechanisms that output information to the operator, such as a display 840, a printer 850, a speaker, etc. Communication interface 812 may comprise any transceiver-like mechanism such as for example two 1 Gb Ethernet interfaces that enables computing system 800 to communicate with other devices and/or systems, for example mechanisms for communicating with one or more other computing systems. The communication interface 812 of computing system 800 may be connected to such another computing system 860 by means of a local area network (LAN) or a wide area network (WAN, such as for example the internet, in which case the other computing system may for example comprise a suitable web server. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example 1TB SATA disk drives, and control the reading and writing of data to and/or from these storage elements 808. Although the storage elements 808 above is described as a local disk, in general any other suitable computer-readable media such as a removable magnetic disk, optical storage media such as a CD or DVD, -ROM disk, solid state drives, flash memory cards, ... could be used.

The steps executed in the method for bypass detection according to the present invention, illustrated by the above embodiments, may be implemented as programming instructions stored in local memory 804 of the computing system 800 for execution by its processor 802. Alternatively the instructions may be stored on the storage element 808 or be accessible from another computing system through the communication interface 812.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for detection of a bypass (134; 734) of an interconnect (133; 733) to a telecommunication network (130; 730), comprising:
- generating a test call (263; 367; 467; 567; 663) to or through a real subscriber number of a real subscriber (131; 231; 331; 431; 531; 631; 731) active in said telecommunication network;
- obtaining call data (154, 153; 265; 372; 472; 572; 665; 753) from the operator of said real subscriber (131; 231; 331; 431; 531; 631; 731) and/or from a test probe (132; 232; 332; 432; 532; 632; 732) whereto said real subscriber number of said real subscriber (131; 231; 331; 431; 531; 631; 731) is temporarily forwarded during a time interval wherein said test call (263; 367; 467; 567; 663) is made;
- extracting a received calling line identifier for said test call (263; 367; 467; 567; 663) from said call data (154, 153; 265; 372; 472; 572; 665; 753); and
- detecting presence of a bypass (134; 734) by analysis of said received calling line identifier.

2. A method for detection of a bypass (134; 734) of an interconnect (133; 733) to a telecommunication network (130; 730) according to claim 1,
wherein said call data (154; 753) are obtained from said operator of said real subscriber (131; 731).

3. A method for detection of a bypass (134; 734) of an interconnect (133; 733) to a telecommunication network (130; 730) according to claim 2,
wherein said call data (154) comprise Call Data Records; and
wherein detecting presence of a bypass (134) comprises:
- CDR matching in order to determine a CDR matching with said test call;
- using a calling line identifier in said CDR matching with said test call to identify said bypass (134).

4. A method for detection of a bypass (134; 734) of an interconnect (133; 733) to a telecommunication network (130; 730) according to claim 2 or claim 3,
wherein said Call Data Records comprise one or more of:
- CDRs automatically generated by said operator for billing purposes; or
- CDRs of call attempts generated for not connected calls by said operator; or
- CDRs made accessible by said operator for profiling purposes; or
- CDRs or similar records generated by signalling monitoring systems.

5. A method for detection of a bypass (134; 734) of an interconnect (133; 733) to a telecommunication network (130; 730) according to any one of claims 2 to 4,
wherein said call data (753) comprise signalling data for calls and/or call attempts to said real subscriber number of said real subscriber (731), obtained from a signalling tap (735) in said telecommunication network (730).

6. A method for detection of a bypass (134; 734) of an interconnect (133; 733) to a telecommunication network (130; 730) according to any one of claims 2 to 5,
wherein said call data comprise signalling data for calls and/or call attempts to said real subscriber number of said real subscriber, obtained through lawful interception.

7. A method for detection of a bypass (134; 734) of an interconnect (133; 733) to a telecommunication network (130; 730) according to claim 1,
wherein said call data (153; 265; 372; 472; 572; 665) are obtained from a test probe (132; 232; 332; 432; 532; 632) in said telecommunication network whereto said real subscriber number of said real subscriber (131; 231; 331; 431; 531; 631) is temporarily forwarded during a time interval wherein said test call (263; 367; 467; 567; 663) is made without intercepting the signalling of calls to said real subscriber number at a gateway.

8. A method for detection of a bypass (134; 734) of an interconnect (133; 733) to a telecommunication network (130; 730) according to claim 7,
wherein temporarily forwarding said real subscriber number of said real subscriber (231) to said test probe (232) comprises:
- transmitting a command (261) to a Home Location Register or Visited Location Register (290) of said telecommunication network via an application programming interface (280) of said telecommunication network wherein said command (261) enables to configure call forwarding of said real subscriber number (231) to said test probe (232).

9. A method for detection of a bypass (134; 734) of an interconnect (133; 733) to a telecommunication network (130; 730) according to claim 7,
wherein temporarily forwarding said real subscriber number of said real subscriber (331) to said test probe (332) comprises:
- transmitting a specific USSD code (362) from said test probe (332) or any subscription managed by the test call system to a USSD gateway (380) in said telecommunication network, accompanied by an identification of said real subscriber number, said specific USSD code (362) triggering specific logic to configure call forwarding; and
- transmitting a command (363) from said USSD gateway (380) to a Home Location Register or Visited Location Register (390) of said telecommunication network, wherein said command enables to configure call forwarding for said real subscriber number (331) to said test probe (332), and
wherein said method further comprises transmitting instructions (365) from said test probe (332) to make said test call (367).

10. A method for detection of a bypass (134; 734) of an interconnect (133; 733) to a telecommunication network (130; 730) according to claim 9,
wherein said method further comprises:
- transmitting a specific call forward deactivation USSD code (369) from said test probe (332) to said USSD gateway (380) after said test call (367); and
- transmitting a command (370) from said USSD gateway (380) to said Home Location Register or Visited Location Register (390) of said telecommunication network, wherein said command enables to deactivate said call forwarding of said real subscriber number (331) to said test probe (332).

11. A method for detection of a bypass (134; 734) of an interconnect (133; 733) to a telecommunication network (130; 730) according to claim 7,
wherein temporarily forwarding said real subscriber number of said real subscriber (431) to said test probe (432) comprises:
- transmitting an SMS message (462) with specific code from said test probe (432) or any subscription managed by the test call system to an SMS server (480) in said telecommunication network, accompanied by an identification of said real subscriber number; and
- transmitting a command (463) from said SMS server (480) to a Home Location Register or Visited Location Register (490) of said telecommunication network, wherein said command (463) enables to configure call forwarding for said real subscriber number (431) to said test probe (432), and
wherein said method further comprises transmitting instructions (465) from said test probe (432) to make said test call (467).

12. A method for detection of a bypass (134; 734) of an interconnect (133; 733) to a telecommunication network (130; 730) according to claim 7,
wherein temporarily forwarding said real subscriber number of said real subscriber (531) to said test probe (532) comprises:
- transmitting a command (562) with specific code from said test probe (531) or any subscription managed by the test call system to an Intelligent Network service (580) in said telecommunication network, accompanied by an identification of said real subscriber number, wherein said real subscriber number is a prepaid number; and
- transmitting a command (563) from said Intelligent Network service (580) to a Home Location Register or Visited Location Register (590) of said telecommunication network, wherein said command (563) enables to configure call forwarding for said real subscriber number (531) to said test probe (532), and
wherein said method further comprises transmitting instructions (565) from said test probe (532) to make said test call.

13. A method for detection of a bypass (134; 734) of an interconnect (133; 733) to a telecommunication network (130; 730) according to claim 7,
wherein temporarily forwarding said real subscriber number of said real subscriber (631) to said test probe (632) comprises:
- transmitting a command (661) to a Home Location Register or Visited Location Register (690) of said telecommunication network via a signalling server (680) of said telecommunication network wherein said command (661) enables to configure call forwarding of said real subscriber number (631) to said test probe (632).

14. A method for detection of a bypass (134; 734) of an interconnect (133; 733) to a telecommunication network (130; 730) according to any one of claims 7 to 13, further comprising:
- configuring a subscription coupled to said test probe (132; 232; 332; 432; 532; 632; 732) in said telecommunication network (130; 730) with an 0800 profile or alternate free phone profile.

15. A method for detection of a bypass (134; 734) of an interconnect (133; 733) to a telecommunication network (130; 730) according to any one of claims 9, 11, 12 or 13, further comprising:
- transmitting a specific code as part of an USSD command, SMS message, IN message or signalling message to respectively an USSD gateway (380), SMS server (480), IN service (580) or signalling server (680) to obtain the call forward state of said real subscriber number in order to be able to restore said call forward state or to abandon the test.

16. A method for detection of a bypass (134; 734) of an interconnect (133; 733) to a telecommunication network (130; 730) according to any one of claims 7 to 15, wherein temporarily forwarding said real subscriber (131; 231; 331; 431; 531; 631; 731) to said test probe (132; 232; 332; 432; 532; 632; 732) comprises either one of:
- forwarding said real subscriber number (131; 231; 331; 431; 531; 631; 731) to said test probe (132; 232; 332; 432; 532; 632; 732) for a limited, predetermined time interval;
- forwarding said real subscriber number (131; 231; 331; 431; 531; 631; 731) to said test probe (132; 232; 332; 432; 532; 632; 732) until said test call (263; 367; 467; 567; 663) is completed; or
- forwarding said real subscriber number (131; 231; 331; 431; 531; 631; 731) to said test probe (132; 232; 332; 432; 532; 632; 732) until said test call (263; 367; 467; 567; 663) is completed or a predetermined timer expires, whichever occurs first.

17. A method for detection of a bypass (134; 734) of an interconnect (133; 733) to a telecommunication network (130; 730) according to any one of the preceding claims, further comprising:
- selecting said real subscriber number of said real subscriber (131; 231; 331; 431; 531; 631; 731) from an intelligent list of real subscribers received from said operator of said telecommunication network (130; 730).

18. A method for detection of a bypass (134; 734) of an interconnect (133; 733) to a telecommunication network (130; 730) according to any claim 17, wherein said intelligent list comprises subscriber numbers of real subscribers of said telecommunication network (130; 730) that in recent past received an amount of international calls exceeding a certain threshold.

19. A method for detection of a bypass (134; 734) of an interconnect (133; 733) to a telecommunication network (130; 730) according to any claim 17, wherein said intelligent list comprises subscriber numbers of real subscribers of said telecommunication network (130; 730) that recently unsubscribed from said telecommunication network (130; 730).

20. A method for detection of a bypass (134; 734) of an interconnect (133; 733) to a telecommunication network (130; 730) according to any claim 17, wherein said intelligent list comprises subscriber numbers of real subscribers of said telecommunication network (130; 730) that were never before configured in call forward mode.

21. A method for detection of a bypass (134; 734) of an interconnect (133; 733) to a telecommunication network (130; 730) according to any one of claims 17 to 20, wherein certain high profile real subscribers of said telecommunication network (130; 730) have been removed from said intelligent list.

22. A method for detection of a bypass (134; 734) of an interconnect (133; 733) to a telecommunication network (130; 730) according to any one of the preceding claims, further comprising:
- sending a message to said real subscriber number to inform said real subscriber that his number will temporarily be out of service for a test.

23. A method for detection of a bypass (134; 734) of an interconnect (133; 733) to a telecommunication network (130; 730) according to claim 22, further comprising:
- requesting approval from said real subscriber to perform said test.

24. A method for detection of a bypass (134; 734) of an interconnect (133; 733) to a telecommunication network (130; 730) according to claim 22 or claim 23, further comprising:
- sending a message or a certain credit (267; 373; 473; 573; 667) to said real subscriber (131; 231; 331; 431; 531; 631; 731) after said test.

25. A system for detection of a bypass (134; 734) of an interconnect (133; 733) to a telecommunication network (130; 730), said system comprising:
- means (110; 210; 310; 410; 510; 610; 710) adapted to originate a test call (263; 367; 467; 567; 663) to or through a real subscriber number of a real subscriber (131; 231; 331; 431; 531; 631; 731) of said telecommunication network (130; 730); and
- a control system (140; 240; 340; 440; 540; 640; 740) configured to:
• control initiation of said test call (263; 367; 467; 567; 663) to or through said real subscriber number;
• receive call data (154, 153; 265; 372; 472; 572; 665; 753) from the operator of said real subscriber (131; 231; 331; 431; 531; 631; 731) and/or from a test probe (132; 232; 332; 432; 532; 632; 732) whereto said real subscriber number of said real subscriber (131; 231; 331; 431; 531; 631; 731) is temporarily forwarded during a time interval wherein said test call (263; 367; 467; 567; 663) is made;
• extract a received calling line identifier for said test call (263; 367; 467; 567; 663) from said call data (154, 153; 265; 372; 472; 572; 665; 753); and
• detect presence of a bypass (134; 734) by analysis of said received calling line identifier.

26. A system for detection of a bypass (134; 734) of an interconnect (133; 733) to a telecommunication network (130; 730) according to claim 25, said system further comprising:
- a test probe (132; 232; 332; 432; 532; 632; 732) in said telecommunication network (130; 730) whereto said real subscriber number of said real subscriber (131; 231; 331; 431; 531; 631; 731) is temporarily forwarded during a time interval wherein said test call (263; 367; 467; 567; 663) is made without intercepting the signalling of calls to said real subscriber number at a gateway.

27. A system for detection of a bypass (134; 734) of an interconnect (133; 733) to a telecommunication network (130; 730) according to claim 26, further comprising:
- an application programming interface (280) of said telecommunication network adapted to transmit a command (261) to a Home Location Register or Visited Location Register (290) of said telecommunication network (130; 730), wherein said command (261) enables to configure call forwarding of said real subscriber number to said test probe (132; 232; 332; 432; 532; 632; 732).

28. A system for detection of a bypass (134; 734) of an interconnect (133; 733) to a telecommunication network (130; 730) according to claim 26, further comprising a USSD gateway (380), wherein:
- said test probe (332) is further adapted to transmit a specific USSD code (362) to said USSD gateway (380) in said telecommunication network, accompanied by an identification of said real subscriber number, said specific USSD code (362) triggering specific logic to configure call forwarding; and
- said USSD gateway (380) is further adapted to transmit, upon receipt of said specific USSD code (362), a command (363) to a Home Location Register or Visited Location Register (390) of said telecommunication network, wherein said command (363) enables to configure call forwarding for said real subscriber number (331) to said test probe (332); and
- said test probe (332) is further controlled to transmit instructions (365) to make said test call (367).

29. A system for detection of a bypass (134; 734) of an interconnect (133; 733) to a telecommunication network (130; 730) according to claim 26, further comprising an SMS server (480), wherein:
- said test probe (432) is adapted to transmit an SMS message (462) with specific code to said SMS server (480) in said telecommunication network, accompanied by an identification of said real subscriber number; and
- said SMS server (480) is adapted to transmit, upon receipt of said SMS message (462) with specific code, a command (463) to a Home Location Register or Visited Location Register (490) of said telecommunication network, wherein said command (463) enables to configure call forwarding for said real subscriber number (431) to said test probe (432); and
- said test probe (432) is further controlled to transmit instructions to make said test call (467).

30. A system for detection of a bypass (134; 734) of an interconnect (133; 733) to a telecommunication network (130; 730) according to claim 26, further comprising an Intelligent Network service (580), wherein:
- said test probe (532) is adapted to transmit a command (562) with specific code to said Intelligent Network service (580) in said telecommunication network, accompanied by an identification of said real subscriber number wherein said real subscriber number is a prepaid number; and
- said Intelligent Network service (580) is adapted to transmit, upon receipt of said command (562) with specific code, a command (563) to a Home Location Register or Visited Location Register (590) of said telecommunication network, wherein said command (563) enables to configure call forwarding for said real subscriber number (531) to said test probe (532); and
- said test probe (532) is further controlled to transmit instructions (565) to make said test call (567).

31. A system for detection of a bypass (134; 734) of an interconnect (133; 733) to a telecommunication network (130; 730) according to claim 26, further comprising:
- a signalling server (680) adapted to transmit a command (661) to a Home Location Register or Visited Location Register (690) of said telecommunication network (130; 730), wherein said command (661) enables to configure call forwarding of said real subscriber number (631) to said test probe (632).
